# DEMANDE DE BREVET EUROPEEN

(11) **EP 2 144 016 A1**
(43) Date de publication de la demande: **13.01.2010**
(21) Numéro de dépôt: 09305598.6
(22) Date de dépôt: 25.06.2009
(51) Int. Cl.: F24J 2/52, E04D 3/361, E04D 3/30

(54) **Structure support de panneau solaire en surface de construction**

(30) Priorité: 07.07.2008 FR 0803828
(71) Demandeur: Sol in G, 72190 Saint-Pavace (FR)
(72) Inventeur: Josse, Gérard, 72400, La Ferté Bernard (FR)
(74) Mandataire: Laget, Jean-Loup

(57) **Abrégé**

Structure support de panneau(x) (14) solaire(s) en surface d'une construction, du type comprenant au moins deux plaques (2) supports disposées côte à côte, à recouvrement partiel, lesdites plaques (2) présentant chacune au moins une nervure (3) longitudinale, située en dehors de la zone (5) de liaison à recouvrement desdites plaques (2) supports et formant une zone support de panneau (14) solaire en position surélevée.

La structure est caractérisée en ce que les plaques (2) supports sont, dans leur zone (5) de liaison, montées à recouvrement ajustable, l'une des nervures (3) de chacune des plaques (2) supports étant équipée de moyens de maintien (6A, 7A ; 6B, 7B) pour former une nervure (3) d'encadrement apte à former avec la nervure (3) d'encadrement d'une plaque (2) support adjacente les deux côtés opposés d'un cadre de dimension réglable entre lesquels est apte à s'insérer un panneau (14) solaire.

## Description

La présente invention concerne une structure support de panneau(x) solaire(s) en surface extérieure d'une construction, en particulier en toiture ou en façade d'une construction, ainsi qu'un ensemble comprenant au moins un panneau solaire et une structure support du type précité.

La mise en place de panneaux solaires en toiture ou en façade d'une construction, à des fins de production de chauffage, d'électricité ou d'eau chaude pour ladite construction, s'est développée depuis une dizaine d'années. Cette mise en place s'opère à l'aide d'une structure support formée de plaques disposées côte à côte et à superposition partielle. Chaque plaque support de ladite structure présente un bord longitudinal venant à recouvrement d'une plaque support adjacente et au moins deux nervures longitudinales situées dans la zone de liaison à recouvrement desdites plaques entre elles, lesdites nervures formant une zone support de panneau solaire en position surélevée par rapport au plan général desdites plaques de manière à former entre panneau solaire et plaque au moins une conduite d'évacuation d'eau et de ventilation et d'éléments techniques propres aux panneaux solaires.

Indépendamment du mode de liaison entre panneau solaire et plaque support, la conception d'un tel ensemble est toujours identique, à savoir qu'une plaque support supporte soit un seul un panneau solaire de dimension similaire à ladite plaque, comme l'illustre le brevet européen EP 0.952.616, soit deux panneaux solaires qui, une fois disposés côte à côte, correspondent à la dimension de la plaque support, comme l'illustre le brevet EP 1.548.202. Chaque plaque support est donc conçue pour la réception d'un ou deux panneau(x) solaire(s) de dimension prédéterminée choisie en correspondance de la dimension de la plaque support.

Il est également connu à travers le brevet EP-1.310.747 une structure support de panneau(x) solaire(s) en surface extérieure d'une construction, en particulier en toiture ou en façade d'une construction. Cette structure support comprend au moins deux plaques supports disposées côte à côte et venant par leur bord, dit longitudinal, à recouvrement partiel, lesdites plaques présentant chacune au moins une nervure longitudinale, située en dehors de la zone de liaison à recouvrement desdites plaques supports et formant une zone support de panneau solaire en position surélevée par rapport au plan général desdites plaques, les plaques supports étant, dans leur zone de liaison à recouvrement, montées à recouvrement ajustable, de préférence entre deux positions extrêmes, par emboîtement à coulissement dans le sens d'un écartement ou d'un rapprochement des nervures. Dans cette structure, le panneau solaire est supporté par une seule plaque de largeur similaire, par l'intermédiaire de pattes de fixation solidaires du panneau solaire. La largeur de la plaque support est donc déterminée par la dimension du panneau solaire.

Or ces dernières années sont apparus sur le marché des panneaux solaires de différentes dimensions pour s'adapter à tous types de situation. Il en résulte l'obligation de multiplier en parallèle le nombre de plaques supports ce qui engendre des stocks de plaques supports importants du fait du grand nombre de formats nécessaire.

Un but de la présente invention est donc de proposer une structure support de panneau et un ensemble intégrant une telle structure dont les conceptions permettent avec un nombre de formats de plaque réduit de s'adapter aux dimensions du ou des panneau(x) solaire(s) à supporter et permettent la réception de panneaux solaires quelles que soient leur largeur, leur longueur ou leur épaisseur.

Un autre but de la présente invention est de proposer une structure support dont la conception permet à l'aide d'un même modèle de plaque support de couvrir une large plage dimensionnelle de panneaux solaires.

Un autre but de la présente invention est de proposer une structure support et un ensemble du type précité dont les conceptions permettent de s'adapter aux dimensions de panneaux solaires à supporter sans nuire à la qualité de maintien et à la facilité de pose des panneaux solaires sur ladite structure support.

A cet effet, l'invention a pour objet une structure support de panneau(x) solaire(s) en surface extérieure d'une construction, en particulier en toiture ou en façade d'une construction, ladite structure support comprenant au moins deux plaques supports disposées côte à côte et venant par leur bord, dit longitudinal, à recouvrement partiel, lesdites plaques présentant chacune au moins une nervure longitudinale, située en dehors de la zone de liaison à recouvrement desdites plaques supports et formant une zone support de panneau solaire en position surélevée par rapport au plan général desdites plaques, **caractérisée en ce que** les plaques supports sont, dans leur zone de liaison à recouvrement, montées à recouvrement ajustable, de préférence entre deux positions extrêmes, par emboîtement à coulissement dans le sens d'un écartement ou d'un rapprochement des nervures, la ou au moins l'une des nervures de chacune des plaques supports étant équipée de moyens de maintien pour former une nervure dite d'encadrement apte à maintenir au moins un bord périphérique d'un panneau solaire, les nervures d'encadrement de deux plaques supports adjacentes montées à recouvrement formant entre elles les deux côtés opposés d'un cadre de dimension réglable entre lesquels est apte à s'insérer un panneau solaire, de dimension variable, la dimension du cadre étant ajustable en fonction du recouvrement desdites plaques supports entre elles.

Grâce à la réalisation d'un cadre ouvert de réception de panneaux solaires dont deux côtés opposés sont formés à l'aide de deux nervures d'encadrement appartenant à deux plaques supports adjacentes montées à recouvrement ajustable, il est possible, par simple variation de la zone de recouvrement desdites plaques support, obtenue par déplacement relatif à coulissement desdites plaques supports entre elles, de faire varier la dimension entre côtés parallèles opposés du cadre pour pouvoir accueillir des panneaux solaires de dimensions quelconques tant en largeur qu'en longueur, de même qu'en épaisseur.

Ainsi, le poseur peut, en un temps court, ajuster sur site la dimension de la structure support aux dimensions des panneaux solaires et assujettir de manière sûre et régulière les panneaux solaires à ladite structure support.

De préférence, au moins une partie des moyens de maintien de la ou de chaque nervure d'encadrement est réalisée d'une seule pièce avec ladite nervure d'encadrement.

De préférence, au moins une partie des moyens de maintien de la ou de chaque nervure d'encadrement est rapportée sur ladite nervure.

Dans un mode de réalisation préféré de l'invention, chaque plaque support comporte au moins une nervure d'encadrement équipée d'au moins deux séries de moyens de maintien pour former une double nervure d'encadrement apte à maintenir un bord périphérique de deux panneaux solaires adjacents.

Dans le cas d'un mode de réalisation du type dans lequel chaque plaque support comprend, au niveau de chacun de ses bords longitudinaux, une nervure longitudinale de rive, l'une des nervures de rive étant apte à recouvrir, l'autre à être recouverte par, la nervure de rive d'une plaque support adjacente, la structure support est **caractérisée en ce qu**'elle comprend en outre, pour la fixation de chaque plaque support en surface extérieure de la construction à équiper, des moyens de fixation de type sabot, chaque sabot, couplable à la surface de la construction, étant de forme complémentaire du creux d'une nervure de plaque support, ladite nervure étant apte à coiffer ledit sabot.

De préférence, la largeur de la ou de chaque nervure d'encadrement de chaque plaque support, prise suivant une direction transversale à l'axe longitudinal de ladite nervure, est inférieure à la course de déplacement de ladite plaque support pour son passage d'une position extrême à une autre à l'état monté à recouvrement partiel de ladite plaque support avec une plaque support adjacente.

Grâce à cette disposition les possibilités de variation des dimensions de la zone de liaison à recouvrement entre deux plaques supports sont optimisées.

L'invention a encore pour objet un ensemble du type comprenant au moins un panneau solaire et une structure support d'au moins un panneau solaire en surface extérieure d'une construction **caractérisé en ce que** la structure support est du type précité.

L'invention sera bien comprise à la lecture de la description suivante d'exemples de réalisation, en référence aux dessins annexés dans lesquels :

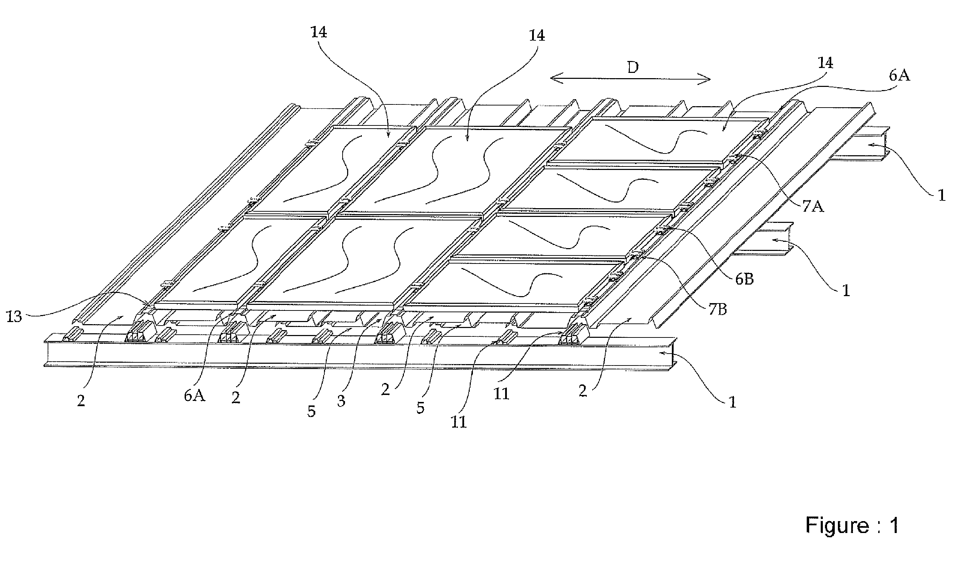

La figure 1 représente une vue en perspective en position éclatée d'un ensemble formé de panneaux solaires et d'une structure support desdits panneaux conforme à l'invention ;

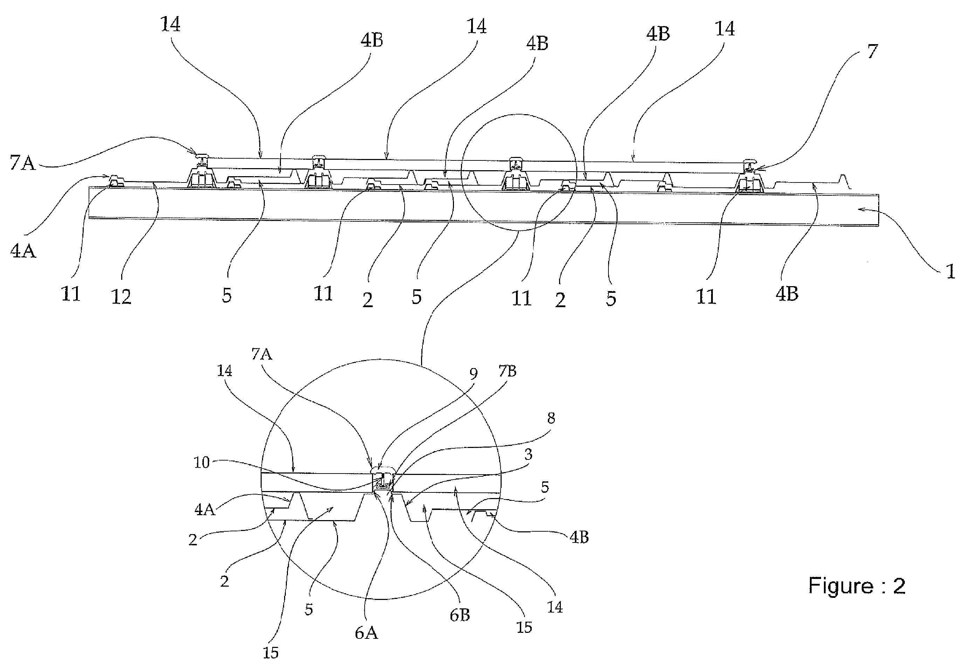

La figure 2 représente une vue en coupe de l'ensemble représenté à la figure 1 avec une vue de détail de l'ensemble au niveau d'une nervure d'encadrement ;

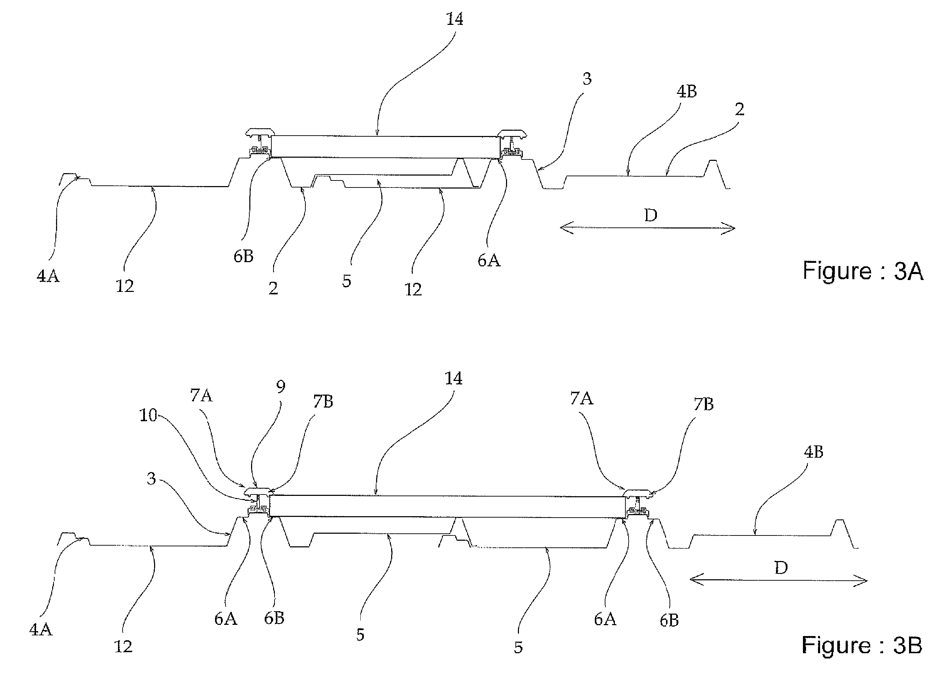

Les figures 3A et 3B représentent chacune une vue en coupe d'un ensemble formé de deux plaques supports et d'un panneau solaire, la figure 3A représentant l'ensemble en position de plus grand recouvrement des plaques supports pour l'accueil d'un panneau solaire de petite dimension et la figure 3B représentant l'ensemble en position de plus faible recouvrement des plaques supports pour l'accueil d'un panneau solaire de grande dimension ;

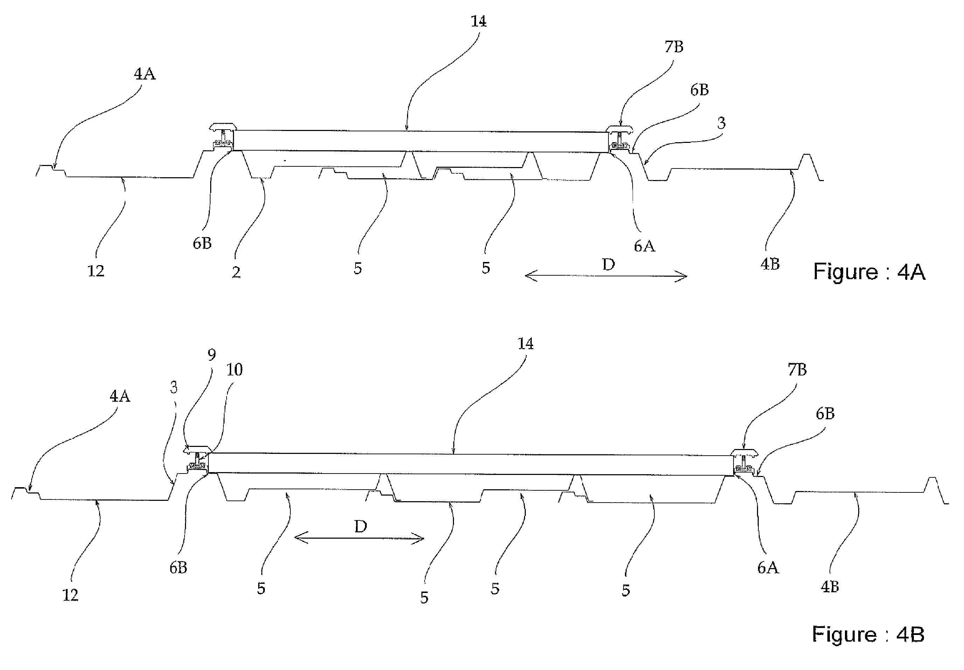

Les figures 4A et 4B représentent chacune une vue en coupe d'un ensemble formé de deux plaques supports et d'un panneau solaire, ledit ensemble étant à la figure 4A représenté en position de plus grand recouvrement des plaques supports pour l'accueil d'un panneau solaire de petite dimension et à la figure 4B en position de plus faible recouvrement des plaques supports pour l'accueil d'un panneau solaire de grande dimension, l'une des plaques supports étant formée en deux parties assemblées l'une à l'autre par recouvrement à emboîtement coulissant pour accroître la plage de dimension admissible du panneau solaire.

Comme mentionné ci-dessus, la structure support de panneaux 14 solaires objet de l'invention est plus particulièrement destinée à être installée en surface extérieure d'une construction en particulier en toiture 1, inclinée ou non, ou en façade d'une construction pour former en coopération avec les panneaux 14 solaires une couverture, un bardage ou un élément de parement de ladite construction.

Cette structure support comprend au moins deux plaques 2 supports généralement métalliques disposées côte à côte et venant par leur bord longitudinal à recouvrement partiel.

Dans l'exemple représenté aux figures 3A et 3B, chaque plaque 2 support est formée d'une seule pièce. Aux figures 4A et 4B, au moins l'une des plaques 2 supports est formée de deux pièces venant à recouvrement partiel ajustable par déplacement à coulissement desdites pièces entre elles afin d'accroître les possibilités de réglage par variation de dimension de ladite plaque.

Les solutions de réalisation en une seule pièce ou en plusieurs pièces de chacune des plaques supports constituent des solutions équivalentes.

La structure support de la figure 1 comporte quatre plaques 2 support, chaque plaque support présente au moins une nervure 3 longitudinale située en dehors de la zone 5 de liaison à recouvrement desdites plaques 2 supports et forme une zone support de panneaux 14 solaires en position surélevée par rapport au plan général desdites plaques. Par plan général, on entend ici le plan d'appui de la plaque support sur une surface quelconque. La surélévation permet de ménager entre plaque support et panneau au moins une conduite 15 d'évacuation des eaux et de ventilation.

Dans le cas d'un toit incliné, chaque plaque 2 support est disposée sur la charpente de sorte que l'axe longitudinal de chaque nervure s'étend parallèlement à la pente du toit, c'est-à-dire suivant la direction gouttière-faîtage.

De manière caractéristique à l'invention, les plaques supports sont, dans leur zone 5 de liaison à recouvrement, montées à recouvrement ajustable, de préférence entre deux positions extrêmes, par emboîtement à coulissement dans le sens d'un écartement ou d'un rapprochement des nervures 3.

La ou au moins l'une des nervures 3 de chaque plaque 2 support est équipée de moyens de maintien 6A, 7A ; 6B, 7B pour former une nervure 3 dite d'encadrement apte à maintenir au moins un bord périphérique d'un panneau 14 solaire. Ainsi, les nervures 3 d'encadrement de deux plaques 2 supports adjacentes montées à recouvrement forment entre elles les deux côtés opposés d'un cadre de dimension réglable, ledit cadre étant ouvert sur chacun de ses deux autres bords.

Entre les deux côtés opposés de ce cadre peut être inséré un panneau 14 solaire de dimension variable. Les dimensions du cadre, en particulier la distance entre les deux bords opposés du cadre formé par les nervures 3 d'encadrement est fonction du recouvrement partiel desdites plaques 2 supports entre elles.

Ainsi, dans l'exemple représenté à la figure 3A, les nervures 3 d'encadrement des deux plaques supports adjacentes montées à recouvrement sont en position de rapprochement maximal, la zone 5 de liaison à recouvrement est maximale et le cadre formé correspond à un cadre de petite dimension. A l'inverse, dans la figure 3B, les nervures 3 d'encadrement des deux plaques supports adjacentes montées à recouvrement sont en position d'écartement maximal, la zone 5 de liaison à recouvrement est minimale et le cadre formé correspond à un cadre de grande dimension.

Le passage de la position de recouvrement maximal à la position de recouvrement minimal ou inversement s'effectue par simple déplacement à coulissement desdites plaques 2 supports entre elles.

Pour permettre un tel déplacement relatif à coulissement des plaques 2 supports montées à recouvrement partiel, chaque plaque de support comprend au niveau de chacun de ses bords longitudinaux une nervure longitudinale dite de rive.

L'une des nervures de chaque plaque 2 support représentée en 4B aux figures est apte à recouvrir la nervure de rive d'une plaque support adjacente. L'autre nervure de rive de chaque plaque 2 support représentée en 4A aux figures est apte à être recouverte par la nervure de rive d'une plaque support adjacente.

La nervure 4A de rive de chaque plaque support apte à être recouverte par la nervure 4B de rive d'une plaque 2 support adjacente est séparée de la nervure 3 d'encadrement au moins par un plan 12 le long duquel est apte à coulisser par sa base la nervure 4B de rive de la plaque support adjacente à l'état monté à recouvrement partiel desdites plaques 2 supports pour un réglage du recouvrement. Ce réglage s'opère suivant la direction D représentée aux figures.

La largeur de la nervure 4B de rive de chaque plaque support apte à recouvrir la nervure 4A de rive d'une plaque support adjacente est supérieure à la largeur de la nervure 4A de rive apte à être recouverte par la nervure 4B de rive d'une plaque adjacente, la différence de largeur correspondant au jeu de réglage du recouvrement à l'état monté à recouvrement partiel desdites plaques supports entre elles. Il doit être noté que, par largeur de chaque nervure, on entend la dimension prise suivant une direction orthogonale à l'axe longitudinal de ladite nervure. Les flancs de la nervure 4B de rive forment alternativement une surface de butée de la nervure 4A de rive coiffée par la nervure 4B de rive en position extrême de recouvrement minimal ou maximal des plaques 2 supports.

Dans les exemples représentés, chaque nervure 4A, 4B de rive présente un sommet à profil en escalier. De préférence, la nervure 4B de rive apte à recouvrir la nervure 4A de rive d'une plaque support adjacente est de hauteur suffisante pour former une zone support supplémentaire du panneau 14 solaire en position surélevée comme l'illustrent les figures. En outre, la partie de la base de cette nervure 4B qui vient à recouvrement d'une nervure de rive adjacente est disposée décalée par rapport au plan d'appui de la plaque et s'étend au-dessus dudit plan d'appui pour éviter la formation d'une surépaisseur dans la zone 5 de liaison à recouvrement desdites plaques supports entre elles. Ceci est une caractéristique classique dans le cas d'un montage à recouvrement par emboîtement.

Comme mentionné ci-dessus, la ou au moins l'une des nervures 3 située(s) en dehors de la zone 5 de liaison à recouvrement desdites plaques 2 supports entre elles, est équipée de moyens de maintien 6A, 7A ; 6B, 7B pour former une nervure 3 dite d'encadrement apte à maintenir au moins un bord périphérique d'un panneau 14 solaire.

Dans les exemples représentés, chaque plaque comporte une seule nervure 3 d'encadrement.

Au moins une partie 6A, 6B des moyens de maintien 6A, 7A ; 6B, 7B de la ou de chaque nervure 3 d'encadrement est réalisée d'une seule pièce avec ladite nervure 3 d'encadrement.

En outre, au moins une partie 7A, 7B des moyens de maintien 6A, 7A ; 6B, 7B de la ou de chaque nervure 3 d'encadrement est rapportée sur ladite nervure 3.

De préférence et comme l'illustrent les figures, chaque plaque 2 support comporte au moins une nervure 3 d'encadrement équipée d'au moins deux séries de moyens de maintien 6A, 6B ; 7A, 7B pour former une double nervure d'encadrement apte à maintenir un bord périphérique de deux panneaux 14 solaires adjacents.

En d'autres termes, la double nervure d'encadrement de chaque plaque support forme, avec la première série de moyens de maintien 6A, 7A, une première nervure d'encadrement apte à coopérer avec la nervure d'encadrement d'une première plaque support adjacente montée à recouvrement partiel avec un bord longitudinal de ladite plaque support pour former les deux côtés opposés d'un premier cadre récepteur de panneau solaire. Cette double nervure d'encadrement forme, avec la deuxième série de moyens de maintien 6B, 7B, une deuxième nervure d'encadrement apte à coopérer avec la nervure d'encadrement d'une deuxième plaque support adjacente montée à recouvrement avec le bord longitudinal opposé de ladite plaque support pour former les deux côtés opposés d'un deuxième cadre récepteur de panneau solaire.

Dans un ensemble de trois plaques 2 supports disposées côte à côte et montées à recouvrement partiel deux à deux, la nervure d'encadrement de la plaque intermédiaire délimite avec la nervure d'encadrement de chaque plaque de support qui la jouxte les deux côtés opposés d'un cadre de dimension ajustable apte à recevoir un panneau solaire.

Dans les exemples représentés, chaque nervure 3 d'encadrement est équipée de deux feuillures ménagées dans la zone de raccordement du flanc de la nervure avec le sommet de ladite nervure. Chaque feuillure séparée ainsi de la feuillure adjacente par une saillie 8 longitudinale sert à accueillir un bord périphérique d'un panneau solaire.

Dans les exemples représentés, chaque série de moyens 6A, 7A ; 6B, 7B de maintien est formée d'un premier type de moyens de maintien 6A ; 6B distincts d'une série à une autre et d'un deuxième type de moyens de maintien 7A ; 7B au moins partiellement communs d'une série à une autre. Le premier type de moyens de maintien 6A ; 6B de chaque série de moyens de maintien affecte la forme d'un logement longitudinal de type gorge ou feuillure ménagé à ou au voisinage du sommet de la nervure 3 d'encadrement comportant les deux séries de moyens de maintien et le deuxième type de moyens de maintien 7A ; 7B de chaque série de moyens de maintien est formé de moyens de bridage en forme générale de L inversé disposés au sommet de la double nervure 3 d'encadrement, la branche verticale du L étant commune aux deux séries de moyens de maintien pour former la branche 10 verticale d'un T, chaque branche 9 horizontale du T formant une aile apte à maintenir un panneau 14 solaire en appui contre le premier type de moyens de maintien associé.

Chaque panneau solaire vient donc par l'un de ses bords périphériques en appui à l'intérieur d'une feuillure de la nervure 3 d'encadrement dans laquelle il est maintenu immobilisé par l'intermédiaire des moyens de bridage agissant par serrage du panneau contre ladite feuillure.

Pour permettre la fixation de chaque plaque 2 support en surface extérieure de la construction à équiper, la structure support comporte encore des moyens de fixation de type sabot. Chaque sabot 11 couplable à la surface de la construction est de forme complémentaire du creux d'une nervure 3, 4A, de plaque support, ladite nervure 3, 4A étant apte à coiffer ledit sabot.

### Le montage d'un tel ensemble s'opère comme suit :

Les sabots 11 sont fixés directement généralement par vissage sur la surface extérieure telle qu'une toiture d'une construction à équiper en panneaux 14 solaires. L'écartement des sabots 11 est choisi en fonction de la disposition des plaques 2 support, les plaques 2 supports sont posées sur lesdits sabots 11 de sorte qu'au moins certaines des nervures des plaques viennent coiffer lesdits sabots, immobilisant ainsi suivant une direction orthogonale auxdites nervures lesdites plaques support.

Lesdites plaques 2 supports sont ensuite immobilisées axialement par rapport auxdites nervures par fixation directe desdites plaques supports généralement par vissage à la surface de la construction à équiper. Chaque plaque support est montée à recouvrement d'une plaque support adjacente et forme avec ladite plaque adjacente les deux côtés opposés d'un cadre de réception d'un panneau 14 solaire.

Chaque panneau 14 solaire est donc disposé à l'intérieur entre les deux bords opposés du cadre formé et repose par deux de ses bords périphériques opposés dans une feuillure d'une nervure d'encadrement formant l'un des côtés dudit cadre.

Les moyens de bridage assurent ensuite un maintien en position du panneau solaire dans lesdites feuillures.

Une pièce 13 anti-glissement peut être fixée à ou au voisinage d'une extrémité d'au moins certaines des nervures de raidissement de la structure support pour empêcher les panneaux 14 solaires de glisser le long des nervures au moment de la pose desdits panneaux solaires dans le cas d'une pose sur toiture inclinée.

Du fait de la succession des nervures au niveau de la structure support, il est créé entre panneau solaire et structure support une aération et une ventilation naturelle. En outre, la structure support forme un revêtement étanche de la surface à équiper en panneaux solaires.

Grâce à la conception de la structure support telle que décrite ci-dessus une telle structure support peut accueillir des panneaux solaires de longueur, d'épaisseur et de largeur quelconque à l'intérieur d'une large plage dimensionnelle.

## Revendications

1. Structure support de panneau(x) (14) solaire(s) en surface extérieure d'une construction, en particulier en toiture (1) ou en façade d'une construction, ladite structure support comprenant au moins deux plaques (2) supports disposées côte à côte et venant par leur bord, dit longitudinal, à recouvrement partiel, lesdites plaques (2) présentant chacune au moins une nervure (3) longitudinale, située en dehors de la zone (5) de liaison à recouvrement desdites plaques (2) supports et formant une zone support de panneau (14) solaire en position surélevée par rapport au plan général desdites plaques (2), **caractérisée en ce que** les plaques (2) supports sont, dans leur zone (5) de liaison à recouvrement, montées à recouvrement ajustable, de préférence entre deux positions extrêmes, par emboîtement à coulissement dans le sens d'un écartement ou d'un rapprochement des nervures (3), la ou au moins l'une des nervures (3) de chacune des plaques (2) supports étant équipée de moyens de maintien (6A, 7A ; 6B, 7B) pour former une nervure (3) dite d'encadrement apte à maintenir au moins un bord périphérique d'un panneau (14) solaire, les nervures (3) d'encadrement de deux plaques (2) supports adjacentes montées à recouvrement formant entre elles les deux côtés opposés d'un cadre de dimension réglable entre lesquels est apte à s'insérer un panneau (14) solaire de dimension variable, la dimension du cadre étant ajustable en fonction du recouvrement desdites plaques (2) supports entre elles.

2. Structure support de panneau(x) (14) solaire(s) selon la revendication 1,
**caractérisée en ce qu'**au moins une partie (6A, 6B) des moyens de maintien (6A, 7A ; 6B, 7B) de la ou de chaque nervure (3) d'encadrement est réalisée d'une seule pièce avec ladite nervure (3) d'encadrement.

3. Structure support de panneau(x) (14) solaire(s) selon les revendications 1 et 2,
**caractérisée en ce qu'**au moins une partie (7A, 7B) des moyens de maintien (6A, 7A ; 6B, 7B) de la ou de chaque nervure (3) d'encadrement est rapportée sur ladite nervure (3).

4. Structure support de panneau(x) (14) solaire(s) selon l'une des revendications 1 et 2,
**caractérisée en ce que** chaque plaque (2) support comporte au moins une nervure (3) d'encadrement équipée d'au moins deux séries de moyens de maintien (6A, 6B ; 7A, 7B) pour former une double nervure d'encadrement apte à maintenir un bord périphérique de deux panneaux (14) solaires adjacents.

5. Structure support de panneau(x) (14) solaire(s) selon la revendication 4,
**caractérisée en ce que** chaque série de moyens (6A, 7A ; 6B, 7B) de maintien est formée d'un premier type de moyens de maintien (6A ; 6B) distincts d'une série à une autre et d'un deuxième type de moyens de maintien (7A ; 7B) au moins partiellement communs d'une série à une autre.

6. Structure support de panneau(x) (14) solaire(s) selon la revendication 5,
**caractérisée en ce que** le premier type de moyens de maintien (6A ; 6B) de chaque série de moyens de maintien affecte la forme d'un logement longitudinal de type gorge ou feuillure ménagé à ou au voisinage du sommet de la nervure (3) d'encadrement comportant les deux séries de moyens de maintien.

7. Structure support de panneau(x) (14) solaire(s) selon la revendication 5,
**caractérisée en ce que** le deuxième type de moyens de maintien (7A ; 7B) de chaque série de moyens de maintien est formé de moyens de bridage en forme générale de L inversé disposés au sommet de la double nervure (3) d'encadrement, la branche verticale du L étant commune aux deux séries de moyens de maintien pour former la branche verticale d'un T, chaque branche horizontale du T formant une aile apte à maintenir un panneau (14) solaire en appui contre le premier type de moyens de maintien associé.

8. Structure support de panneau(x) (14) solaire(s) selon l'une des revendications 1 à 7, du type dans laquelle chaque plaque (2) support comprend au niveau de chacun de ses bords longitudinaux une nervure (4A, 4B) longitudinale dite de rive, l'une (4B) des nervures (4A, 4B) de rive étant apte à recouvrir, l'autre (4A) à être recouverte par la nervure de rive d'une plaque support adjacente,
**caractérisée en ce qu'**elle comprend en outre, pour la fixation de chaque plaque (2) support en surface extérieure de la construction à équiper des moyens de fixation de type sabot, chaque sabot (11), couplable à la surface de la construction, étant de forme complémentaire du creux d'une nervure (3, 4A) de plaque support, ladite nervure (3, 4A) étant apte à coiffer ledit sabot (11).

9. Structure support de panneau(x) (14) solaire(s) selon l'une des revendications 1 à 8,
**caractérisée en ce que** la largeur de la ou de chaque nervure (3) d'encadrement de chaque plaque (2) support, prise suivant une direction transversale à l'axe longitudinal de ladite nervure (3), est inférieure à la course de déplacement de ladite plaque support pour son passage d'une position extrême à une autre à l'état monté à recouvrement partiel de ladite plaque (2) support avec une plaque (2) support adjacente.

10. Ensemble du type comprenant au moins un panneau (14) solaire et une structure support d'au moins un panneau (14) solaire en surface extérieure d'une construction,
**caractérisé en ce que** la structure support est conforme à l'une des revendications 1 à 9.
